# EUROPEAN PATENT SPECIFICATION

(11) **EP 3 066 606 B1**
(45) Date of publication and mention of the grant of the patent: **10.03.2021**
(21) Application number: 14790916.2
(22) Date of filing: 09.10.2014
(51) Int. Cl.: G06F 21/31

(54) **SYSTEMS AND METHODS FOR VERIFYING A USER BASED ON REPUTATIONAL INFORMATION**
SYSTEME UND VERFAHREN ZUR VERIFIZIERUNG EINES BENUTZERS AUF DER BASIS VON REPUTATIONSINFORMATIONEN
SYSTÈMES ET PROCÉDÉS POUR VÉRIFIER UN UTILISATEUR SUR LA BASE D'INFORMATIONS DE RÉPUTATION

(30) Priority: 04.11.2013 US 201361899407 P; 04.03.2014 US 201414196796
(43) Date of publication of application: 14.09.2016
(73) Proprietor: Google LLC, Mountain View, CA 94043 (US)
(72) Inventor: MOSCICKI, Angelique, Mountain View, California 94043 (US); TAN, Edison, Mountain View, California 94043 (US); ARNOUD, Sacha Christophe, Mountain View, California 94043 (US); ABRAHAM, David John, Mountain View, California 94043 (US); CRAWFORD, Michael, Pymont, New South Wales 2009 (AU); MCMILLEN, Colin, Mountain View, California 94043 (US); MCCLAIN, Joseph Andrew, Mountain View, California 94043 (US); PENDLETON, Bryan Arthur, Mountain View, California 94043 (US); RUSSELL, Mark R., Mountain View, California 94043 (US); VON AHN, Luis, Mountain View, California 94043 (US)
(74) Representative: Suckling, Andrew Michael
(86) International application number: PCT/US2014/059873
(87) International publication number: WO 2015/065675

(56) References cited:
- WO-A1-2010/134862
- US-A1- 2008 189 768
- US-A1- 2011 029 781
- US-A1- 2012 233 665
- US-A1- 2012 246 008
- US-A1- 2013 160 098

## Description

### FIELD

The present disclosure is generally directed to CAPTCHA systems. More particularly, the present disclosure is directed to computerized CAPTCHA systems and associated methods of operation for verifying a user based on reputational information.

### BACKGROUND

Trust is an asset in web-based interactions. For example, a user must trust that an entity provides sufficient mechanisms to confirm and protect her identity or other confidential information in order for the user to feel comfortable interacting with such entity. Further, an entity that provides a web-resource must be able to block automated attacks that attempt to gain access to the web-resource for malicious purposes. Thus, sophisticated authentication mechanisms that can discern between a resource request originating from a human being and a request generated by an automated machine are a vital tool in ensuring that web-resources are protected from automated attacks and developing the necessary relationship of trust between a resource provider and a user.

CAPTCHA systems ("completely automated public Turing test to tell computers and humans apart") can provide such an authentication mechanism. One goal of a CAPTCHA system is to exploit situations in which it is known that humans perform tasks better than automated machines. Thus, as part of a verification process, CAPTCHA systems can provide a challenge that is solvable by a human but generally unsolvable by a machine.

In certain existing CAPTCHA system configurations, the resource provider is highly involved in the verification process and serves as an intermediary between the user computing device and the CAPTCHA system. As an example, the user computing device can request access to a resource from a resource provider, for example via a webpage of the resource provider. As a result, in such existing configurations, the resource provider can return a webpage or other computer-readable code that instructs the user computing device to retrieve a simple CAPTCHA challenge from a CAPTCHA system, for example by fetching an image of distorted text from the CAPTCHA system. Alternatively, the resource provider can fetch the image from the CAPTCHA system and then provide the image to the user computing device.

After receiving the challenge, the user computing device can obtain a solution from the user and return it to the resource provider, for example via a form on the resource provider website. In turn, the resource provider can communicate with the CAPTCHA system to confirm whether the user-provided solution is correct. Thus, in such configurations, the resource provider is responsible for supervising the verification process and is required to handle or forward several sets of data.

However, several problems are associated with such existing configurations. As an example, in such existing configurations, the authentication process relies solely on the passive complexity of the CAPTCHA challenge. For example, for configurations in which an image challenge is simply fetched from the CAPTCHA system, the verification process relies solely on the difficulty of solving the image challenge. Thus, the verification process is not dynamically tuned or otherwise intelligently tailored in light of any additional available information. In particular, such existing processes fail to consider or incorporate any preexisting, available reputational information associated with the user or user computing device.

As another example, because the resource provider is required to serve as an intermediary between the user computing device and the CAPTCHA system, each instance of communication can suffer from increased latency, thereby increasing the delay between requesting and accessing the resource and reducing user satisfaction.

Another problem associated with existing configurations is that the resource provider must maintain sufficient computing resources and security procedures to implement and supervise the verification process. In particular, in such existing configurations, the resource provider can be required to update their system or computing capabilities in order to accommodate new challenge formats, such as, for example, audio CAPTCHA challenges for the visually impaired.

Thus, each improvement or update to the verification process can require corresponding updates or enhanced computing resources implemented by the resource provider. As automated attacks generally increase in sophistication and intelligence over time, new verification techniques will be required, placing a strain on the resource provider to continually update their system and ensure that they are not a vulnerable link in the verification process. For many resource providers, such continual updates can represent a drain of computing or engineering resources and a distraction from otherwise improving aspects of their core product or service.

Finally, from the perspective of the user, another problem associated with existing configurations is that the user must interact with the resource provider as a supervisor of the verification process. For example, certain verification processes can include the submission of identifying information, such as a user account, in addition to solving a CAPTCHA challenge. In certain situations, the user may prefer to interact directly with a CAPTCHA system that is provided by a known, trusted entity rather than submit identifying information to a yet unknown or untrusted resource provider.

US 2011/029781 proposes a server to implement human response tests of graduated difficulty that can suppress access by spambots. The server includes a network interface and a test controller. The network interface connects the server to a network and facilitates electronic communications between the server and a client computer coupled to the network. The test controller is coupled to the network interface. The test controller implements a human response test with a level of difficulty on the client computer in response to an access request by the client computer. The level of difficulty of the human response test is dependent on a determination whether the access request is deemed to originate from a spambot.

US 2008/189768 proposes a system and method for determining a trust level for a non-approved user in a social network. The method includes monitoring requests for social network interactions between an approved user and the non-approved user and determining if each interaction requested is of a first type or a second type. The method further includes increasing a first trust value when the interaction requested is of the first type and increasing a second trust value when the interaction requested is of the second type. The method further includes determining the trust level based on the first trust value and the second trust value. The method further includes changing the status of the non-approved user to an approved user based on the trust level, the first trust value and/or the second trust value.

### SUMMARY

The scope of the invention is defined by the appended claims. Aspects and advantages of embodiments of the present disclosure will be set forth in part in the following description, or may be obvious from the description, or may be learned through practice of the embodiments.

One aspect of the present disclosure is directed to a computerized CAPTCHA system configured to perform operations. The operations include receiving, by one or more computing devices, a request to engage in a verification process from a user computing device. The operations include obtaining, by the one or more computing devices, one or more reputation signals associated with the user computing device including accessing, from a database, a user web-history associated with the user computing device and treating the web-history as a reputation signal, the database being external to the one or more computing devices. The operations include determining, by the one or more computing devices, a trust score for the user computing device based on the one or more reputation signals. The operations include selecting, by the one or more computing devices, a challenge to provide to the user computing device based at least in part on the trust score. The operations include receiving, by the one or more computing devices, a response to the challenge from the user computing device. The operations include updating the trust score based on the received response. The operations include determining, by the one or more computing devices, whether to verify the user computing device based on the updated trust score by providing the user computing device a verification token when the updated trust score is greater than a treshold value.

These and other features, aspects and advantages of the present disclosure will become better understood with reference to the following description and appended claims. The accompanying drawings, which are incorporated in and constitute a part of this specification, illustrate embodiments of the present disclosure and, together with the description, serve to explain the related principles.

### BRIEF DESCRIPTION OF THE DRAWINGS

A detailed discussion of embodiments of the present disclosure directed to one of ordinary skill in the art is set forth in the specification, which makes reference to the appended figures, in which:
FIG. 1 depicts an example system for verifying a user computing device according to an example embodiment of the present disclosure;
FIG. 2 depicts a flow chart of an example method for verifying a user computing device according to an example embodiment of the present disclosure;
FIG. 3 depicts an example user interface according to an example embodiment of the present disclosure;
FIG. 4 depicts a flow chart of an example method for operating a computerized CAPTCHA system according to an example embodiment of the present disclosure; and
FIG. 5 depicts a flow chart of an example method for operating a computerized CAPTCHA system according to an example embodiment of the present disclosure.

### DETAILED DESCRIPTION

Reference now will be made in detail to embodiments of the present disclosure, one or more examples of which are illustrated in the drawings. Each example is provided by way of explanation of embodiments, not limitation of the present disclosure. In fact, it will be apparent to those skilled in the art that various modifications and variations can be made to embodiments without departing from the scope or spirit of the present disclosure. For instance, features illustrated or described as part of one embodiment can be used with another embodiment to yield a still further embodiment.

Generally, the present disclosure is directed to systems and methods in which a computerized CAPTCHA system determines whether to verify a user computing device based upon a plurality of reputation signals associated with the user computing device. In particular, the computerized CAPTCHA system can determine a trust score based on the reputation signals, select a challenge to provide to the user computing device based on the trust score, and determine whether to verify the user computing device based on a received response to the challenge and/or the trust score.

As an example, a user can attempt to bid in an online auction using her smartphone. In order to access the bidding interface and place the bid, the user can first be required to directly interact with a computerized CAPTCHA system and verify her human status, thereby preventing "bots" from damaging the bidding process.

In some embodiments, in order to obtain the benefits of the techniques described herein, the user may have to allow the use of reputation signals associated with the user or her device. If the user does not allow use of such signals, then the user may not receive the benefits of the techniques described herein.

In various embodiments, the reputation signals may include one or more of, for example, a device type, one or more device capabilities, an Internet Protocol address, a current location, a user web-history, a user location history, whether the user participates in various other web-services, or other additional information.

In some embodiments in which the systems and method discussed herein utilize information about users or user devices, such as device type, device location, user participation in web-services, or other information, the users may be provided with an opportunity to control whether programs or features collect or utilize such information. In addition, in various embodiments, certain information or data can be treated in or more ways before it is stored or used so that personally identifiable information is removed.

Based on the obtained reputation signals, the computerized CAPTCHA system can determine a trust score for the user computing device. As an example, the trust score can be a sum of a plurality of predetermined trust values respectively associated with a plurality of reputation signal categories. Thus, a user computing device that can demonstrate or provide additional reputation signals can receive a larger trust score. As other examples, the trust score can be a weighted average of the trust values or can be an output of a scoring formula designed to calculate the trust score based on the reputation signals.

The computerized CAPTCHA system can dynamically tune or adjust various attributes of the verification process based on the trust score determined for the user computing device. As an example, the computerized CAPTCHA system can select a challenge type, a challenge difficulty, or a challenge format based on the trust score. As another example, the computerized CAPTCHA system can perform rate limiting or adjust other parameters of the verification process based on the trust score.

Thus, as an example, if the computerized CAPTCHA system obtains a plurality of reputation signals respectively indicating that the user requesting access to the auction bidding interface has a history of non-abusive web-usage, participates in various web-services, is using a relatively expensive consumer computing device (e.g. her smartphone), or other reputation signals that indicate that the user is a human and not a bot, then such user can receive a larger trust score.

Further, because the user has received a larger trust score, the computerized CAPTCHA system can select an easier challenge to provide to the user, can allow a greater number of attempts to solve the challenge, or, in some implementations, can verify the user as human without requiring the user to solve a challenge at all.

The computerized CAPTCHA system can receive a response to the selected challenge from the user computing device. The computerized CAPTCHA system can determine whether to verify the user computing device based on such response and/or the trust score. As an example, the computerized CAPTCHA system can determine whether to verify the user computing device based solely on the received challenge response. Thus, if the response satisfactorily completes or solves the selected challenge, then the computerized CAPTCHA system can verify the user computing device regardless of the trust score. Likewise, an incorrect response can result in denial of verification for a lockout period.

As another example, the computerized CAPTCHA system can update or revise the trust score based on the received challenge response. For example, if the response correctly solves the challenge, then the trust score can be increased. Likewise, an incorrect response can result in the trust score being decreased. The updated trust score can be compared to a threshold value to determine whether to verify the user computing device. In such fashion, a challenge and response performed by the user as part of the verification process can be used as an additional reputation signal, but, in some implementations, is not itself dispositive of the verification process.

Further, in some implementations, once the computerized CAPTCHA system has been sufficiently convinced that the user computing device is operated by a human, the computerized CAPTCHA system can provide a verification token or certificate to the user computing device. The user computing device can then provide the verification token to the resource provider. In turn, the resource provider can confirm the validity of the verification token with the computerized CAPTCHA system. Upon confirmation of token validity, the resource provider can provide the resource to the user computing device.

In such fashion, problems associated with implementation of the verification process by the resource provider can be reduced or eliminated. As an example, the auction website is not required to support multiple challenge formats or update their system each time the verification process is updated or improved. Instead, the auction website can simply rely upon the computerized CAPTCHA system to leverage existing knowledge regarding the reputation of the user to perform the entirety of the verification process. Furthermore, because the user is interacting directly with the computerized CAPTCHA system, the user can be confident that her information is being handled in a more secure fashion, rather than being passed back and forth between the resource provider and an unseen computerized CAPTCHA system.

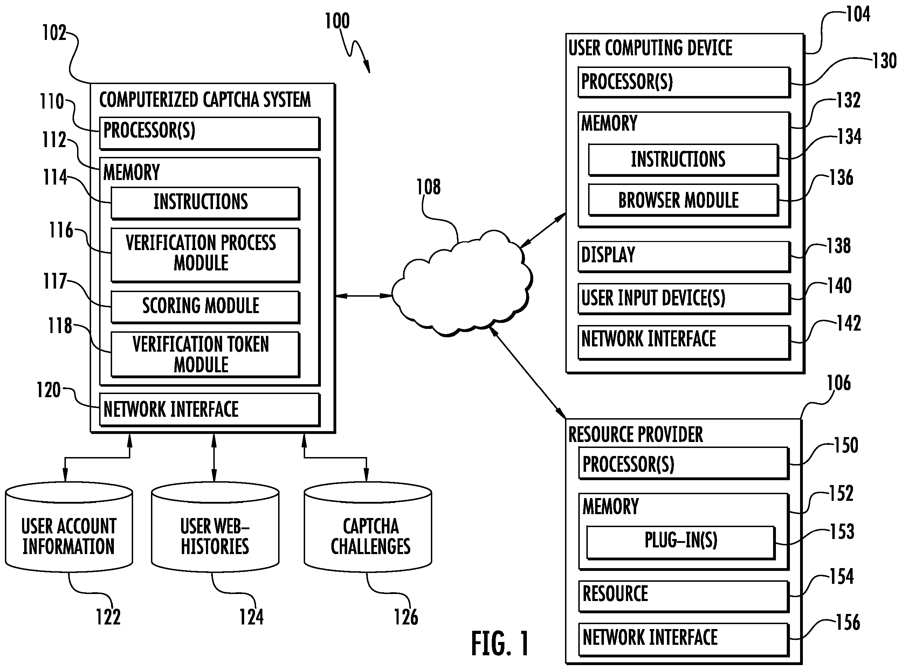

Referring now to the FIGS., example embodiments of the present disclosure will be discussed in further detail. FIG. 1 depicts an example system 100 for verifying a user computing device 104 according to an example embodiment of the present disclosure. In particular, system 100 can include a computerized CAPTCHA system 102, a user computing device 104, and a resource provider 106 in communication with each other over a network 108.

Computerized CAPTCHA system 102 can be implemented using one or more computing devices, such as, for example, one or more servers. In particular, any computing tasks performed by computerized CAPTCHA system 102 can be performed by any combination of one or more computing devices connected in a parallel or distributed computing system. Computerized CAPTCHA system 102 can include one or more processors 110 and a memory 112. Processor 110 can be any suitable processing device and can be one processor or a plurality of processors which are operably connected. Memory 112 can store instructions 114 that cause processor 110 to perform operations to implement the present disclosure.

Memory 112 can also include a number of modules, including, for example, a verification process module 116, a scoring module 117, and a verification token module 118. It will be appreciated that the term "module" refers to computer logic utilized to provide desired functionality. Thus, a module can be implemented in hardware, firmware and/or software controlling a general purpose processor. In one embodiment, the modules are program code files stored on the storage device, loaded into memory and executed by a processor or can be provided from computer program products, for example computer executable instructions, that are stored in a tangible computer-readable storage medium such as RAM, hard disk or optical or magnetic media. When software is used, any suitable programming language or platform can be used to implement the module.

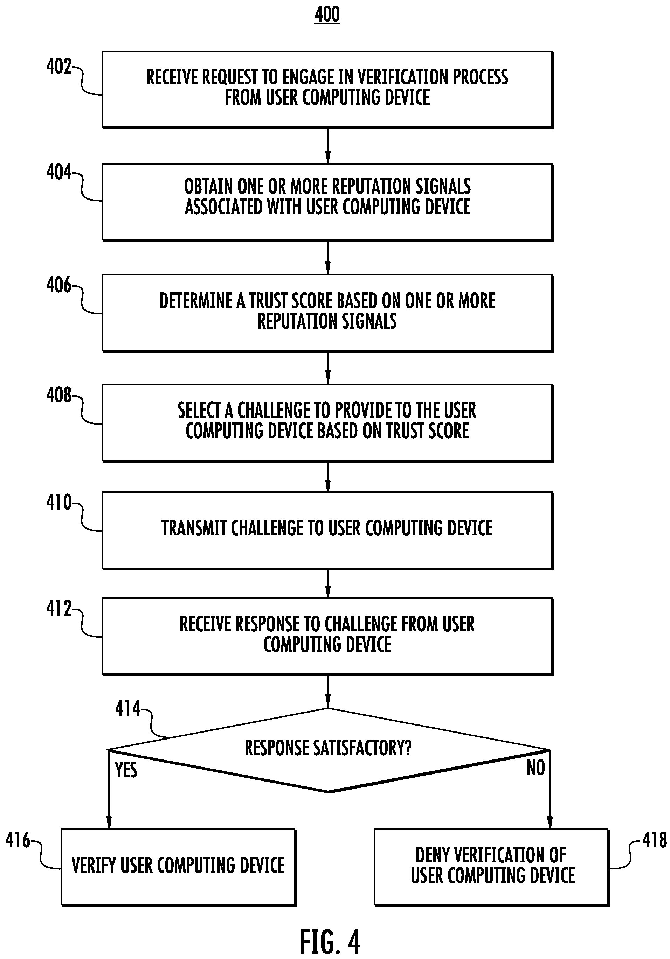

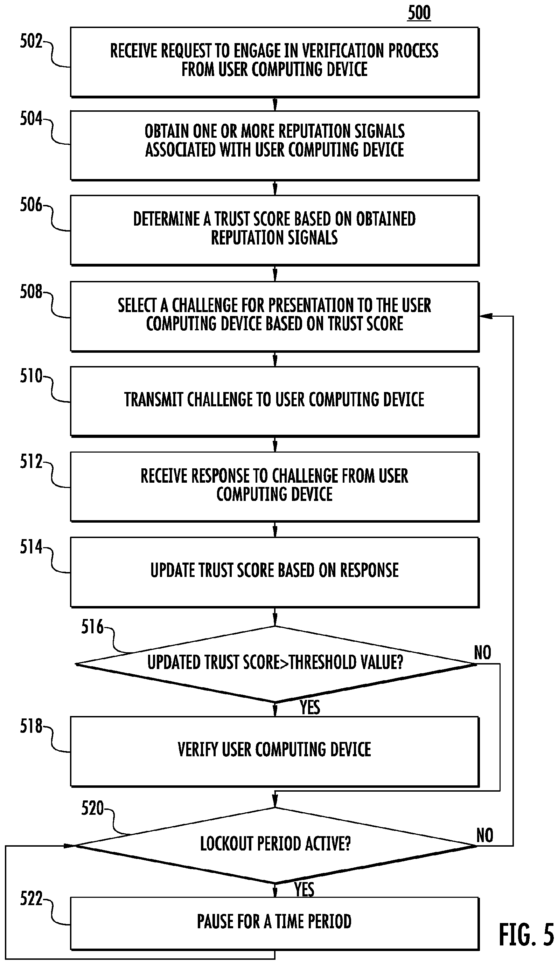

Computerized CAPTCHA system 102 can implement verification process module 116 to perform various aspects of a verification process. For example, verification process module 116 can be implemented to receive a request to engage in a verification process from user computing device 104, select and provide a CAPTCHA challenge to user computing device 104, and determine whether a received response satisfies the provided challenge. In some implementations, verification process module 116 can be implemented to perform aspects of method (400) of FIG. 4 and/or method (500) of FIG. 5.

Computerized CAPTCHA system 102 can implement scoring module 117 to perform various aspects of a verification process. For example, scoring module 117 can be implemented to obtain one or more reputation signals associated with a user computing device 104 and determine a trust score based on the one or more reputation signals. As an example, scoring module 117 can determine the trust score by obtaining from memory 112 a plurality of trust values associated with various reputation signals or signal categories. For example, scoring module 117 can sum the plurality of trust values to determine the trust score. As another example, scoring module 117 can determine the trust score by calculating a weighted average of various trust values or by entering the reputation signals into a scoring function or scoring formula. In some implementations, scoring module 117 can be implemented to perform aspects of method (400) of FIG. 4 and/or method (500) of FIG. 5.

Computerized CAPTCHA system 102 can implement verification token module 118 to generate and validate verification tokens for any number of user computing devices 104 and resource providers 106. For example, verification token module 118 can be implemented to generate and provide a verification token to user computing device 104 and receive and validate a verification token for resource provider 106. In some implementations, verification token module 118 can be implemented to perform aspects of method (400) of FIG. 4 and/or method (500) of FIG. 5.

Furthermore, while verification process module 116, scoring module 117, and verification token module 118 are depicted in FIG. 1 as separate modules or components of computerized CAPTCHA system 102, in some implementations such modules can be combined to form a single module or distributed to form several additional modules.

Computerized CAPTCHA system 102 can also include a network interface 120 for communicating over network 108. Network interface 120 can include any suitable components for interfacing with one more networks, including for example, transmitters, receivers, ports, controllers, antennas, or other suitable components.

Computerized CAPTCHA system 102 can include or otherwise be in communication with any number of databases, including, for example, a user account database 122, a user web-history database 124, and a CAPTCHA challenges database 126. It will be appreciated that any database or other data storage functionality can be implemented using a single database or can be distributed across a plurality of storage devices. Further, each of such databases 122, 124, and 126 can be located locally or located remotely and accessed over a network.

User account database 122 can store or provide data associated with a plurality of user accounts. For example, a user account can be any account or means of identification that is associated with a user of a service. Example user accounts include an operating system account; an account used for purchasing and ownership of content from a content distribution platform; a web-based email account; a social media account; a game account; an application-specific account; or any other suitable user account.

Computerized CAPTCHA system 102 can access user account database 122 to determine whether user computing device 104 is associated with a known user account. As an example, in some implementations, computerized CAPTCHA system 102 is associated with a service provider that offers several of the services discussed above (e.g. web-based email, social media, gaming, and content distribution) and a single user account can be used to participate in, receive, or otherwise control aspects of each of such services.

Thus, in some implementations, the verification process by which computerized CAPTCHA system 102 verifies user computing device 104 can include receiving or otherwise identifying user account information associated with user computing device 104 and cross-referencing such information against user account information 122. In particular, ownership and maintenance of a valid, reputable user account can represent a significant investment of time and computing resources on the part of a user and, therefore, can be a strong reputation signal that the user computing device 104 is operated by a human being and is not an automated bot. In such fashion, preexisting reputational information associated with the user computing device, such as, for example, user account information, can be leveraged to provide enhanced verification of a user computing device 104.

In some embodiments in which the systems and method discussed herein utilize information about users or user computing devices, such as user account information, the users may be provided with an opportunity to control whether programs or features collect or utilize such information. In addition, in various embodiments, certain information or data can be treated in one or more ways before it is stored or used, so that it is not personally identifiable.

User web-history database 124 can store or provide data describing previous web activity or web interactions performed by one or more computing devices associated with a user account. For example, user web-history database 124 can indicate whether a user account has a history of normal, reputable web-usage or whether the user account has been linked to abusive or malicious web-behavior. Thus, in some implementations, the verification process can include accessing and analyzing a user web-history associated with user computing device 104 from database 124 and treating such web-history as a reputation signal.

As noted above, in some embodiments in which the systems and method discussed herein utilize information about users or user computing devices, such as a user web-history, the users may be provided with an opportunity to control whether programs or features collect or utilize such information. In addition, in various embodiments, certain information or data can be treated in one or more ways before it is stored or used, so that it is not personally identifiable.

CAPTCHA challenges database 126 can provide a plurality of different CAPTCHA challenges from which computerized CAPTCHA system 102 can select. For example, the challenges included in database 126 can be of varying size, shape, format, difficulty, programming language, or other variable parameters. For example, available challenge formats can include an image challenge featuring scrambled, blurred, or otherwise distorted text that must be interpreted or decoded, an audio challenge featuring distorted audio that must be interpreted, a visual matching challenge, a visual selection challenge, or other suitable challenge formats. Generally, one or more solutions to each challenge can be stored in challenge database 126 as well.

As an example, in some implementations, available challenge formats can include an opinion questionnaire or an advertisement. For example, when a challenge of low difficulty is selected or desired, then the challenge can include polling the user for an opinion concerning various topics, including, for example, requesting that the user select a personally preferred item of clothing from several options. In other forms, the challenge can simply require the user to click through an advertisement or other forms of advertisement-based challenges.

As another example, in some implementations, CAPTCHA challenges included in database 126 can include challenges optimized for mobile user computing devices, such as smartphones. For example, the challenges for mobile devices can require the user to utilize a touch-sensitive screen of the mobile device to draw a shape, trace an outline, press or select one option out of several options provided, solve a maze, or other challenges which require use of the touch-sensitive screen. In such fashion, users of a mobile user computing device 104 can be provided with an optimized challenge that, for example, does not require use of a keyboard.

User computing device 104 can be a computing device having a processor 130 and a memory 132. As example, user computing device 104 can be a wireless mobile device, a personal digital assistant (PDA), smartphone, tablet, laptop computer, desktop computer, computing-enabled watch, computing-enabled eyeglasses, a wearable computing device, embedded computing system, home appliances, or any other computing device.

Processor 130 of user computing device 104 can be any suitable processing device and can be one processor or a plurality of processors that are operably connected. Memory 132 can include any number of computer-readable instructions 134 or other stored data. For example, memory 132 can include, store, or provide a browser module 136. When implemented by processor 130, browser module 136 can cause or instruct processor 130 to run a web browser application.

It will be appreciated that user computing device 104 can further include any number of other application modules to perform any number of applications to provide additional functionality. In addition, instructions 134 can provide functionality for performing operations according to various programming languages, platforms, layers, or communications techniques. For example, user computing device 104 can include one or more engines for interpreting and executing various programming languages, such as, for example, a JavaScript engine.

User computing device 104 can include or be in communication with a display 138 for displaying information to the user. Further, user computing device 104 can include any number of user input devices 140, such as, for example, a keyboard, a mouse, a microphone, a touch-sensitive screen, motion sensors, a touch-pad, a keyboard stick, buttons, or other suitable controls.

User computing device 104 can further include a network interface 142. Network interface 142 can include any suitable components for interfacing with one more networks, including for example, transmitters, receivers, ports, controllers, antennas, or other suitable components.

Generally, resource provider 106 can be implemented using a server or other computing device. Resource provider 106 can include one or more processors 150 and other suitable components such as a memory 152 and a network interface 156. Processor 150 can implement computer-executable instructions stored on the memory 152 in order to perform desired operations.

Resource provider 106 can provide access to a resource 154 over the network 108. Non-limiting examples of resources 154 include a cloud-based email client, a social media account or content, software as a service, an online auction interface, a financial services account, an online game, a data library, a code library, an arbitrary web-service, or any other suitable resource.

Furthermore, according to an aspect of the present disclosure, memory 152 of resource provider 106 can include one or more plug-ins 153. In particular, resource provider 106 can obtain plug-in 153 from computerized CAPTCHA system 102 or an entity that provides system 102.

As an example, plug-in 153 can include computer-readable instructions and a library so that resource provider 106 can communicate with computerized CAPTCHA system 102 using an application programming interface associated with computerized CAPTCHA system 102. For example, plug-in 153 can be formatted according to any suitable programming environment, including, for example, PHP, ASP.NET, Classic ASP, Java/JSP, Perl, Python, Ruby, Ruby/Rack, ColdFusion, WebDNA, VBScript, or other programming environments.

As another example, plug-in 153 can include computer-readable instructions designed to be embedded within the website of resource provider 106, served by resource provider 106 to user computing device 104, and then executed by user computing device 104. For example, plug-in 153 can include instructions designed to be embedded within any suitable website or application, including, for example, WordPress, MediaWiki, phpBB, FormMail, Movable Type, Drupal, Symfony, TYPA3, NucleusCMS, vBulletin, Joomla, bbPress, ExpressionEngine, FlatPress, PHPKIT, or other applications.

More particularly, plug-in 153 can provide a client-side script to be included within an inline frame, embedded object, portlet, or other embedded application or widget included in the website of resource provider 106. The client-side script can be formatted according to any suitable programming language including, for example, Javascript, Ajax, jQuery, ActionScript, or other programming languages.

User computing device 104 can execute the embedded client-side script to directly engage with computerized CAPTCHA system 102. In particular, use of such client-side script can ensure that communications from user computing device 104 to computerized CAPTCHA system 102 are formatted according to the application programming interface associated with computerized CAPTCHA system 102. In such fashion, resource provider 106 can instruct user computing device 104 to communicate directly with computerized CAPTCHA system 102.

Furthermore, in some implementations, resource provider 106 can store one or more public and/or private keys in memory 152. The public and private keys can have been provided to resource provider 106 by computerized CAPTCHA system 102 and can be used to identify resource provider 106 to computerized CAPTCHA system 102.

As an example, resource provider 106 can provide the public key to a user computing device 104 attempting to access resource 154. The user computing device 104 can provide the public key to computerized CAPTCHA system 102 so that computerized CAPTCHA system 102 is aware of which resource provider 106 the user computing device 104 is attempting to access. As another example, resource provider 106 can provide the private key to computerized CAPTCHA system 102 in its communications with computerized CAPTCHA system 102 so that computerized CAPTCHA system 102 recognizes and identifies resource provider 106 as a known resource provider with which to communicate.

Furthermore, although computerized CAPTCHA system 102 and resource provider 106 are illustrated and discussed as separate entities within the context of system 100 of FIG. 1, it will be appreciated that such architecture is provided as an example. More particularly, in some embodiments of the present disclosure, computerized CAPTCHA system 102 an resource provider 106 can be a single, unified computing system including one or more computing devices. For example, in some embodiments, a particular resource provider 106 can control or otherwise supply computerized CAPTCHA system 102 as an aspect of resource provider 106 for the purposes of protecting a particular resource 154.

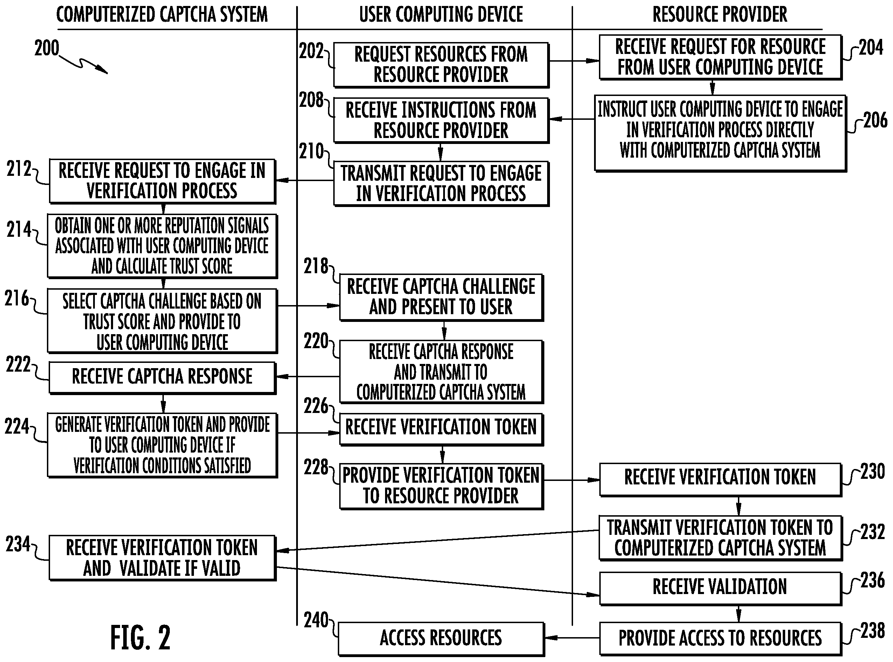

FIG. 2 depicts a flow chart of an example method (200) for verifying a user computing device according to an example embodiment of the present disclosure. Method (200) can be implemented using any suitable computing system, including, for example, example system 100 of FIG. 1.

In addition, although FIG. 2 depicts steps performed in a particular order for purposes of illustration and discussion, methods of the present disclosure are not limited to such particular order or arrangement. One skilled in the art, using the disclosures provided herein, will appreciate that various steps of the method (200) can be omitted, rearranged, combined, and/or adapted in various ways without deviating from the scope of the present disclosure.

At (202) a user computing device can request a resource from a resource provider. At (204) the resource provider can receive the request for the resource from the user computing device.

At (206) the resource provider can instruct the user computing device to engage in a verification process directly with a computerized CAPTCHA system. At (208) the user computing device can receive the instructions from the resource provider to directly engage with the computerized CAPTCHA system. As an example, the resource provider can instruct the user computing device at (206) by redirecting a browser of the user computing device so that it directly connects with the computerized CAPTCHA system and begins the verification process.

As another example, at (206) the resource provider can provide the user computing device with a client-side script that, when executed by the user computing device, causes the user computing device to directly engage with the computerized CAPTCHA system. For example, the client-side script can be included in an inline frame, embedded object, portlet, or other embedded application or widget. In some implementations, the client-side script can be included in a plug-in provided from the computerized CAPTCHA system to the resource provider. Furthermore, in some implementations, at (206) the resource provider can provide the user computing device with a public key identifying the resource provider to the computerized CAPTCHA system.

At (210) the user computing device can transmit a request directly to the computerized CAPTCHA system to engage in a verification process. At (212) the computerized CAPTCHA system can receive the request from the user computing device.

As an example, the request transmitted at (210) can be formatted according to an application programming interface associated with the computerized CAPTCHA system. For example, the request can be transmitted as a result of executing a client-side script provided to the user computing device at (206). Furthermore, in some implementations, the request transmitted at (210) can include a public key associated with the resource provider.

At (214) the computerized CAPTCHA system can obtain one or more reputation signals associated with the user computing device and calculate or otherwise determine or obtain a trust score based on the one or more reputation signals. As examples, the one or more reputation signals can include a device type, a device identifier, one or more device capabilities, an Internet Protocol address, a current location, a user web-history, a user location history, whether the user participates in various other web-services, or other additional information.

According to an aspect of the present disclosure, as an example, at (214) the computerized CAPTCHA system can determine the trust score by summing a plurality of trust values respectively associated with a plurality of reputation signals obtained for the user computing device. For example, in some implementations, the trust value for each reputation signal can be proportional or otherwise indicative of an amount of trust that such reputation signal should reasonably endear.

As an example, a reputation signal can be obtained at (214) that indicates a device type of the user computing device, such as, for example, whether the user computing device is a personal computer, laptop, smartphone, or other device type. The trust values associated with each device type can be based on the relative cost of each device type. Thus, if at (214) the computerized CAPTCHA system obtains a reputation signal indicating that the user computing device is a relatively sophisticated and expensive consumer smartphone, then, as a result, the computerized CAPTCHA system can add a trust value of relatively large value to the trust score. In such fashion, the trust score can be a sum of the available reputation signals. Likewise, if the reputation signal indicates that the user computing device is a low cost device that has historically been used by entities engaged in malicious behavior, then the trust score can be relatively low, zero, or negative.

As another example, a reputation signal can be obtained at (214) that indicates whether the user computing device is operating on an Android operating system or other type of operating system. For example, operating systems traditionally associated with consumer devices can engender a higher trust value while operating systems associated with use and control of automated bots can result in a lower or negative trust value.

As yet another example, a reputation signal can be obtained at (214) that provides a device identifier for the user computing device. For example, the device identifier can be a device serial number associated with the user computing device. The computerized CAPTCHA system can access a database or registry to determine whether reputational information is associated with the device serial number. Such reputational information can affect or be incorporated into the trust score at (214).

As another example, a reputation signal can be obtained at (214) that indicates one or more device capabilities. For example, if the reputation signal indicates that the user computing device is sophisticated and features a wide range of computing capabilities, then a higher trust value can be added to the trust score. Likewise, if the reputation signal indicates that the user computing device is one-dimensional or otherwise limited to a specific set of computing capabilities, then a lower or negative trust value can be added to the trust score.

As another example, a reputation signal can be obtained at (214) that indicates an Internet Protocol address from which the user computing device is communicating. For example, if the reputation signal indicates that the user computing device is located in an area of the world with which automated attacks are not generally associated and that the Internet Protocol address is a valid address in good standing, then a larger trust value can be added to the trust score. Likewise, if the reputation signal indicates that the user computing device is located in an area of the world from which automated attacks are frequent or indicates an Internet Protocol address that is not in good standing or has otherwise been associated with malicious behavior, then a lower or negative trust value can be applied to the trust score. In some implementations, a current location of the user computing device can be obtained and analyzed as well, for example, based on data generated by a positioning system (e.g. GPS system) of the user computing device.

As yet another example, user account information or user web-history information can be obtained as a reputation signal at (214). For example, if the user computing device provides user account information associated with an account that participates in various web-services and has a history of non-abusive web-usage, then a larger trust value can be applied to the trust score at (214). Likewise, if the user computing device identifies a user account that has scarce web-history or a history of malicious or abusive web-usage, then a smaller or negative trust value can be applied to the trust score at (214). In some implementations, the user web-history can include historical locational data as well, and such historical locational data can be treated as a reputation signal. In addition, as discussed above, in order to obtain the benefits of the techniques described herein, the user may provide access to such data.

Generally, as noted above, the trust value for each reputation signal can be proportional or otherwise indicative of an amount of trust that such reputation signal should reasonably endear. Thus, if the reputation signal indicates that the user computing device has a quality or asset that would take a significant amount of time or money to accumulate or obtain, then the trust value associated with such quality or asset can be larger.

For example, maintaining a user account that participates daily in various web services in a non-abusive manner can represent a significant amount of time and energy. Therefore, it will generally be cost-prohibitive for automated attackers to invest such significant amount of time and energy. As such, a user computing device that provides such a reputable user account can receive a relatively large trust score. In such fashion, preexisting reputational information associated with a user computing device can be used to provide a superior, intelligent CAPTCHA system.

In addition, in some embodiments, the trust values associated with respective reputation signals or categories can be optimized or otherwise determined by performing one or more machine learning processes on data having a known characterization or categorization.

Furthermore, as noted above, in some embodiments in which the systems and method discussed herein utilize information about users or user devices, such as device type, device location, user account information, user participation in web-services, or other information, the users may be provided with an opportunity to control whether programs or features collect or utilize such information. In addition, in various embodiments, certain information or data can be treated in or more ways before it is stored or used, so that personally identifiable information is removed.

In addition, the trust score can be determined at (214) in fashions other than summing a number of trust values obtained from memory. As other examples, the trust score can be a weighted average of the trust values or can be an output of a scoring formula or scoring function designed to calculate the trust score based on the reputation signals.

At (216) the computerized CAPTCHA system can select a CAPTCHA challenge based on the trust score determined at (214) and provide the selected challenge to the user computing device. For example, the computerized CAPTCHA system can include a database of CAPTCHA challenges having varying formats, difficulties, shapes, sizes, file format, programming language, or other variable parameters. At (216) the computerized CAPTCHA system can select a CAPTCHA challenge from the database based on the trust score determined at (214).

As an example, in the instance that the trust score obtained at (214) indicates a relatively large amount of trust, then at (216) a challenge having an easier difficulty can be selected. For example, a challenge having an easier difficulty may simply seek to obtain an opinion from the user or require that the user click through an advertisement. Likewise, if the trust score indicates a relatively low amount of trust, then at (216) a challenge having a greater difficulty can be selected.

As other examples, at (216) a challenge format, challenge type, or other attributes of the challenge can be selected based on the trust score. For example, in the instance that the data obtained at (214) indicates that the user computing device is a mobile device, such as, for example, a smartphone, then at (216) the computerized CAPTCHA system can select a CAPTCHA challenge designed for a mobile device.

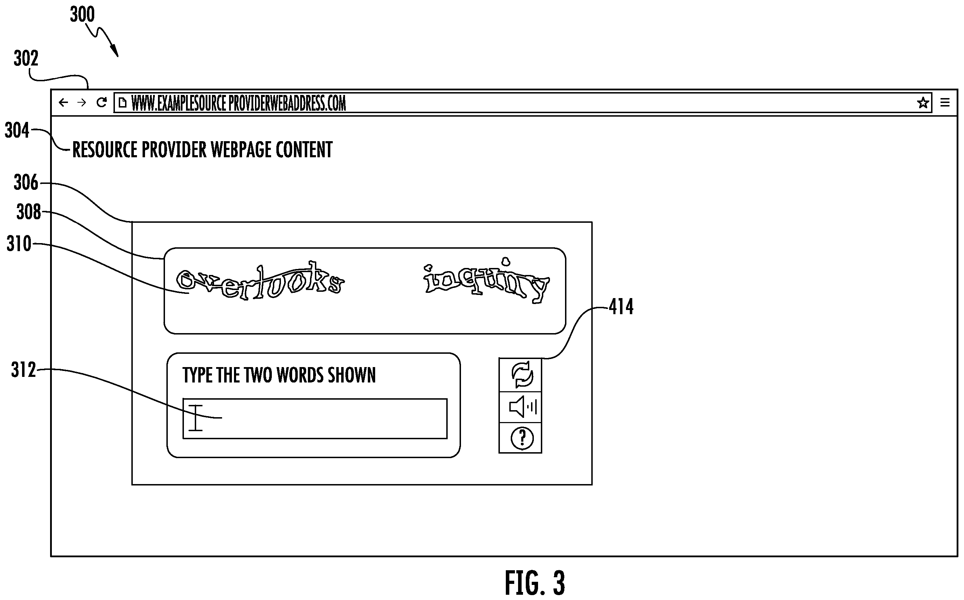

At (218) the user computing device can receive the CAPTCHA challenge from the computerized CAPTCHA system and present it to the user, for example, on a display of the user computing device. As an example, FIG. 3 depicts an example user interface 300 according to an example embodiment of the present disclosure. In particular, user interface 300 can be provided within a browser window 302 of the user computing device.

User interface 300 can include content 304 provided by the resource provider. In addition, user interface 300 can include an inline frame 306. Inline frame 306 can serve as a portal for the user computing device to communicate directly with a computerized CAPTCHA system.

Inline frame 306 can provide a challenge prompt area 308, a challenge response field 312, and a control panel 314. Displayed within challenge prompt area 308 can be a CAPTCHA challenge prompt 310.

Challenge response field 312 can provide an opportunity for the user to input text as a response to the challenge. Control panel 314 can include various controls for interacting with the computerized CAPTCHA challenge system, including, for example, a control to receive a new challenge, a control to receive an audio challenge, and a help or information button.

Returning to FIG. 2, at (220) the user computing device can receive a response from the user and transmit it to the computerized CAPTCHA system. At (222) the computerized CAPTCHA system can receive the response from the user computing device.

At (224) the computerized CAPTCHA system can generate a verification token and provide it to the user computing device if one or more verification conditions are satisfied. At (226) the user computing device can receive the verification token from the computerized CAPTCHA system.

As an example, the computerized CAPTCHA system can generate the verification token and provide it to the user computing device at (224) if the response received at (222) correctly solves or otherwise satisfies the challenge provided at (216). As another example, at (224) the computerized CAPTCHA system can generate and provide the verification token only if the response satisfies the challenge and also the trust score calculated at (214) is greater than a threshold value.

As yet another example, at (224) the verification token can be generated and provided if the trust score calculated at (214) is greater than a threshold value, regardless of whether the response correctly satisfies the challenge. As another example, at (224) the trust score can be updated or revised based on the response received at (222) and the verification token and be generated and provided if the updated trust score is greater than a threshold value. For example, the trust score can be revised upward based on a correct response or revised downwards based on an incorrect response.

The verification token can be an authentication certificate or other security or authentication device or mechanism. For example, in some implementations, the verification token can include a hash of a user computing device identifier or other information or can incorporate the resource provider's public key.

It will be appreciated that, in some implementations, steps (210)-(226) can be considered a verification process. Further, in some implementations, steps (210)-(226) can occur via an inline frame, embedded object, portlet, or other embedded widget or application included in the resource provider's website.

At (228) the user computing device can provide the verification token to the resource provider. At (230) the resource provider can receive the verification token from the user computing device.

At (232) the resource provider can transmit the verification token to the computerized CAPTCHA system. In some implementations, at (232) the resource provider can also transmit its private key to the computerized CAPTCHA system together with the verification token.

At (234) the computerized CAPTCHA system can provide a validation of the verification token to the resource provider if the verification token is valid. If the verification token is invalid or has been tampered with, then the computerized CAPTCHA system can inform the resource provider that the verification token is invalid.

At (236) the resource provider can receive the validation of the verification token from the computerized CAPTCHA system. In response to receiving the validation at (236), at (238) the resource provider can provide the user computing device with access to the resource. At (240) the user computing device can access the resource.

In such fashion, the user or user computing device can be verified by engaging in a verification process directly with the computerized CAPTCHA system. Therefore, problems associated with implementation of the verification process by the resource provider can be reduced or eliminated. As an example, the resource provider is not required to support multiple challenge formats or update their system each time the verification process is updated or improved. Instead, the resource provider can simply rely upon the computerized CAPTCHA system to perform the entirety of the verification process and validate the resulting verification token provided by the user computing device.

FIG. 4 depicts a flow chart of an example method (400) for operating a computerized CAPTCHA system according to an example embodiment of the present disclosure. Method (400) can be implemented by any suitable computerized CAPTCHA system, including computerized CAPTCHA system 102 of FIG. 1.

In addition, although FIG. 4 depicts steps performed in a particular order for purposes of illustration and discussion, methods of the present disclosure are not limited to such particular order or arrangement. One skilled in the art, using the disclosures provided herein, will appreciate that various steps of the method (400) can be omitted, rearranged, combined, and/or adapted in various ways without deviating from the scope of the present disclosure.

At (402) the computerized CAPTCHA system can receive a request to engage in a verification process from a user computing device. For example, a user attempting to access an online auction bidding interface using her smartphone can be redirected by the auction website such that her smartphone directly connects to the computerized CAPTCHA system and requests to engage in the verification process.

At (404) the computerized CAPTCHA system can obtain one or more reputation signals associated with the user computing device. For example, the computerized CAPTCHA system can obtain reputation signals indicating that the user computing device is a relatively expensive consumer mobile device, that the user has a user account in good standing, that the smartphone is communicating from an Internet Protocol address in good standing, that the user has a history of non-abusive web-usage, or other reputation signals.

At (406) the computerized CAPTCHA system can determine a trust score based on the one or more reputation signals. For example, the computerized CAPTCHA system can obtain from memory a trust value associated with each reputation signal obtained at (404). In some implementations, a larger trust value can be obtained for each of such signals as the user and her smartphone have provided several strong signals that indicate that she is a legitimate human user and not an automated bot. For example, the trust values can be summed to determine the trust score.

At (408) the computerized CAPTCHA system can select a challenge to provide to the user computing device based on the trust score. For example, because the trust score determined at (406) was relatively large, then at (408) the computerized CAPTCHA system can select a challenge that is relatively less difficult. As an example, the challenge can request an opinion, provide an advertisement, or otherwise require the user to participate is a crowd-sourced accumulation of information. Further, because the user computing device is a smartphone, then at (408) a challenge can be selected that is designed for a mobile device.

At (410) the computerized CAPTCHA system can transmit the selected challenge to the user computing device. At (412) the computerized CAPTCHA system can receive a response to the challenge from the user computing device.

At (414) the computerized CAPTCHA system can determine whether the response received at (412) satisfactorily satisfies the challenge. If it is determined that the response satisfies the challenge, then at (416) the computerized CAPTCHA system can verify the user computing device. For example, verifying the user computing device at (416) can include generating a verification token and providing it to the user computing device.

However, if it is determined at (414) that the response does not satisfy the challenge then at (418) the computerized CAPTCHA system can deny verification of the user computing device. For example, the computerized CAPTCHA system can refuse to provide a verification token, report the user computing device to the resource provider, place the user computing device in a lockout period, or other actions.

FIG. 5 depicts a flow chart of an example method (500) for operating a computerized CAPTCHA system according to an example embodiment of the present disclosure. Method (500) can be implemented by any suitable computerized CAPTCHA system, including computerized CAPTCHA system 102 of FIG. 1.

In addition, although FIG. 5 depicts steps performed in a particular order for purposes of illustration and discussion, methods of the present disclosure are not limited to such particular order or arrangement. One skilled in the art, using the disclosures provided herein, will appreciate that various steps of the method (500) can be omitted, rearranged, combined, and/or adapted in various ways without deviating from the scope of the present disclosure.

At (502) the computerized CAPTCHA system can receive a request to engage in a verification process from a user computing device. For example, a user attempting to access an online auction bidding interface using her smartphone can be redirected by the auction website such that her smartphone directly connects to the computerized CAPTCHA system and requests to engage in the verification process.

At (504) the computerized CAPTCHA system can obtain one or more reputation signals associated with the user computing device. For example, the computerized CAPTCHA system can obtain reputation signals indicating that the user computing device is a relatively expensive consumer mobile device, that the user has a user account in good standing, that the smartphone is communicating from an Internet Protocol address in good standing, that the user has a history of non-abusive web-usage, or other reputation signals.

At (506) the computerized CAPTCHA system can determine a trust score based on the one or more reputation signals. For example, the computerized CAPTCHA system can obtain from memory a trust value associated with each reputation signal obtained at (504). Thus, a larger trust value can be obtained for each of such signals as the user and her smartphone have provided several strong signals that indicate that she is a legitimate human user and not an automated bot. For example, the trust values can be summed to determine the trust score.

At (508) the computerized CAPTCHA system can select a challenge to provide to the user computing device based on the trust score. For example, because the trust score determined at (506) was relatively large, then at (508) the computerized CAPTCHA system can select a challenge that is relatively less difficult. As an example, the challenge can request an opinion, provide an advertisement, or otherwise require the user to participate is a crowd-sourced accumulation of information. Further, because the user computing device is a smartphone, then at (508) a challenge can be selected that is designed for a mobile device.

At (510) the computerized CAPTCHA system can transmit the selected challenge to the user computing device. At (512) the computerized CAPTCHA system can receive a response to the challenge from the user computing device.

At (514) the trust score can be updated or otherwise revised based on the response. As an example, if the response satisfies the challenge, then the trust score can be revised upward or increased. Likewise, if the response is incorrect or otherwise does not satisfy the challenge, then the trust value can be revised downwards or reduced.

At (516) the computerized CAPTCHA system can determine whether the updated trust score is greater than a threshold value. If the updated trust score is greater than the threshold value, then at (518) the computerized CAPTCHA system can verify the user computing device.

In such fashion, the response to the challenge can be treated as an additional reputation signal, but is not itself dispositive of the verification process. For example, the user attempting to access the bidding interface may have provided an incorrect response to the challenge at (512). Therefore, the trust score can have been revised downwards at (514). However, because the user was able to provide a significant amount of reputation signals indicating that she was a legitimate user, the downward revision at (514) can have been insufficient to reduce the trust score below the threshold value.

However, if it is determined at (516) that the updated trust score is less than the threshold value, then method (500) can proceed to (520) and place the user computing device in a lockout period. In particular, according to an aspect of the present disclosure, the computerized CAPTCHA system can perform rate limiting based on the trust score or as a result of an incorrect response.

Therefore, the user computing device can be placed in a lockout period as indicated by steps (520) and (522). In some implementations, the duration of the lockout period can be determined based on the trust score. For example, a user computing device that has received a very low trust score can be placed in a lockout period of longer duration. In such fashion, the rate limiting can be adjusted based on the relative threat posed by a user computing device, as indicated by the corresponding trust score.

Furthermore, although FIG. 5 shows rate limiting being performed as a lockout period between opportunities to receive and solve a CAPTCHA challenge, other forms of rate limiting can be used. For example, rate limiting can be performed in the style of a token bucket, with, for example, the token refresh rate being a function of the updated trust score.

Referring again to FIG. 5, after the lockout period has expired, then method (500) can return to (508) and select an additional challenge to provide to the user computing device. In such fashion, the trust score associated with a user computing device can be adjusted or revised over a series of varying challenges and responses. As such, a user that initially received a very low trust score can solve a number of challenges to increase her trust score and gain the trust of the system.

While the present subject matter has been described in detail with respect to specific example embodiments and methods thereof, it will be appreciated that those skilled in the art, upon attaining an understanding of the foregoing may readily produce alterations to, variations of, and equivalents to such embodiments. Accordingly, the scope of the present disclosure is by way of example rather than by way of limitation, and the subject disclosure does not preclude inclusion of such modifications, variations and/or additions to the present subject matter as would be readily apparent to one of ordinary skill in the art. The scope of protection sought, is limited by the scope of the appended claims.

## Claims

1. A computer-implemented method for verifying a user as a human user, the computer-implemented method comprising:
receiving (212,402, 502), from a user computing device (104) and by one or more computing devices (102) implementing a computerized Completely Automated Public Turing test to tell Computers and Humans Apart, CAPTCHA, system, a single request to engage in a verification process for accessing, by the user computing device (104), a resource provider computing device (150);
determining, by the one or more computing devices (102) and from the single request, a challenge to provide to the user computing device (104), by:
obtaining (214,404,504), by the one or more computing devices (102), one or more reputation signals associated with the user computing device (104) including accessing, from a database (124), a user web-history associated with the user computing device (104) and treating the web-history as a reputation signal, the database (124) being external to the one or more computing devices;
determining (214,406,506), by the one or more computing devices (102), a trust score for the user computing device based on the one or more reputation signals; and
selecting (216,408,508), by the one or more computing devices (102), and based at least in part on the trust score, the challenge to provide (410,510) to the user computing device;
receiving (222,412,512), by the one or more computing devices (102), a response to the challenge from the user computing device;
updating (514), by the one or more computing devices (102), the trust score based on the response to the challenge to obtain an updated trust score; and
determining (518), by the one or more computing devices (102), whether to verify the user computing device (104) based on the updated trust score by providing, by the one or more computing devices (102), a verification token to the user computing device (104) when the updated trust score is greater than a threshold value.

2. The method of claim 1, wherein the one or more reputation signals comprises a device identifier, or an Internet Protocol address.

3. The method of claim 1, wherein the one or more reputation signals comprise a user account, the user web-history being associated with the user account.

4. The method of claim 1, wherein determining (406,506), by the one or more computing devices (102), the trust score for the user computing device (104) based on the one or more reputation signals comprises summing, by the one or more computing devices (102), one or more trust values associated with the one or more reputation signals to determine the trust score, wherein the one or more trust values are predetermined and accessed from a memory included in the one or more computing devices.

5. The method of claim 1, wherein determining (406,506), by the one or more computing devices (102), the trust score for the user computing device (104) based on the one or more reputation signals comprises entering, by the one or more computing devices (102), the one or more reputation signals into a scoring formula to determine the trust score.

6. The method of claim 1, wherein selecting (408,508), by the one or more computing devices (102), the challenge for presentation to the user computing device (104) based on the trust score comprises selecting, by the one or more computing devices (102), a challenge difficulty based on the trust score.

7. The method of claim 1, wherein selecting (408,508), by the one or more computing devices (102), the challenge for presentation to the user computing device (104) based on the trust score comprises selecting, by the one or more computing devices (102), a challenge format based on the trust score.

8. The method of claim 7, wherein the challenge format comprises one of an advertisement or an opinion poll.

9. The method of claim 1, wherein the method further comprises determining, by the one or more computing devices (102) based on the trust score, a rate at which the user computing device (104) can receive additional challenges.

10. The method of claim 1, wherein the method further comprises providing, by the one or more computing devices (102), a validation of the verification token to the resource provider.

11. A computerized Completely Automated Public Turing test to tell Computers and Humans Apart, CAPTCHA, system (102) configured to perform operations, the operations comprising a method as defined in any one of claims 1 to 10.

12. A computer-readable medium (112) storing instructions (114) that when executed by one or more computing devices cause the one or more computing devices to perform operations, the operations comprising a method as defined in any one of claims 1 to 10.

## Patentansprüche

1. Computerimplementiertes Verfahren zum Verifizieren, dass ein Benutzer ein menschlicher Benutzer ist, wobei das computerimplementierte Verfahren Folgendes umfasst:
Empfangen (212, 402, 502), von einer Benutzer-Computervorrichtung (104) und durch eine oder mehrere Computervorrichtungen (102), die ein computerisiertes System eines vollständig automatisierten öffentlichen Turing-Tests zum Auseinanderhalten von Computern und Menschen, CAPTCHA, implementieren, einer einzelnen Anforderung zum Einlassen in einen Verifizierungsprozess zum Zugreifen, durch die Computervorrichtung (104), auf eine Ressourcenbereitsteller-Computervorrichtung (150);
Bestimmen, durch die eine oder die mehreren Computervorrichtungen (102) und aus der einzelnen Anforderung, einer Herausforderung, die der Benutzer-Computervorrichtung (104) bereitzustellen ist, durch:
Erlangen (214, 404, 504), durch die eine oder die mehreren Computervorrichtungen (102), eines oder mehrerer Reputationssignale, die mit der Benutzer-Computervorrichtung (104) assoziiert sind, einschließend, das Zugreifen von einer Datenbank (124) auf eine Benutzer-Webhistorie, die mit der Benutzer-Computervorrichtung (104) assoziiert ist und Behandeln der Webhistorie als ein Reputationssignal, wobei die Datenbank (124) extern zu der einen oder den mehreren Computervorrichtungen ist;
Bestimmen (214, 406, 506), durch die eine oder die mehreren Computervorrichtungen (102), einer Vertrauensbewertungsziffer für die Benutzer-Computervorrichtung basierend auf dem einen oder den mehreren Reputationssignalen; und
Auswählen (216, 408, 508), durch die eine oder die mehreren Computervorrichtungen (102) und basierend mindestens teilweise auf der Vertrauensbewertungsziffer, der Herausforderung, die der Benutzer-Computervorrichtung bereitzustellen ist (410, 510);
Empfangen (222, 412, 512), durch die eine oder die mehreren Computervorrichtungen (102), einer Antwort auf die Herausforderung von der Benutzer-Computervorrichtung;
Aktualisieren (514), durch die eine oder die mehreren Computervorrichtungen (102), der Vertrauensbewertungsziffer basierend auf der Antwort auf die Herausforderung, um eine aktualisierte Vertrauensbewertungsziffer zu erlangen; und
Bestimmen (518), durch die eine oder die mehreren Computervorrichtungen (102), ob die Benutzer-Computervorrichtung (104) basierend auf der aktualisierten Vertrauensbewertungsziffer zu verifizieren ist, durch Bereitstellen, an die Benutzer-Computervorrichtung (104), durch die eine oder die mehreren Computervorrichtungen (102), eines Verifizierungstokens, wenn die aktualisierte Vertrauensbewertungsziffer größer als ein Schwellenwert ist.

2. Verfahren nach Anspruch 1, wobei das eine oder die mehreren Reputationssignale eine Vorrichtungskennung oder eine Internetprotokoll-Adresse umfassen.

3. Verfahren nach Anspruch 1, wobei das eine oder die mehreren Reputationssignale ein Benutzerkonto umfassen, wobei die Benutzer-Webhistorie mit dem Benutzerkonto assoziiert ist.

4. Verfahren nach Anspruch 1, wobei Bestimmen (406, 506), durch die eine oder die mehreren Computervorrichtungen (102), der Vertrauensbewertungsziffer für die Benutzer-Computervorrichtung (104), basierend auf dem einen oder den mehreren Reputationssignalen, Summieren, durch die eine oder die mehreren Computervorrichtungen (102), eines oder mehrerer Vertrauenswerte umfasst, die mit dem einen oder den mehreren Reputationssignalen assoziiert sind, um die Vertrauensbewertungsziffer zu bestimmen, wobei der eine oder die mehreren Vertrauenswerte im Voraus bestimmt werden und darauf aus einem Speicher, der in der einen oder den mehreren Computervorrichtungen eingeschlossen ist, zugegriffen wird.

5. Verfahren nach Anspruch 1, wobei Bestimmen (406, 506), durch die eine oder die mehreren Computervorrichtungen (102), der Vertrauensbewertungsziffer für die Benutzer-Computervorrichtung (104), basierend auf dem einen oder den mehreren Reputationssignalen, Eingeben, durch die eine oder die mehreren Computervorrichtungen (102), des einen oder der mehreren Reputationssignale in eine Bewertungszifferbestimmungsformel umfasst, um die Vertrauensbewertungsziffer zu bestimmen.

6. Verfahren nach Anspruch 1, wobei Auswählen (408, 508), durch die eine oder die mehreren Computervorrichtungen (102), der Herausforderung, die der Benutzer-Computervorrichtung (104) zu präsentieren ist, basierend auf der Vertrauensbewertungsziffer, Auswählen, durch die eine oder die mehreren Computervorrichtungen (102), einer Herausforderungsschwierigkeit basierend auf der Vertrauensbewertungsziffer umfasst.

7. Verfahren nach Anspruch 1, wobei Auswählen (408, 508), durch die eine oder die mehreren Computervorrichtungen (102), der Herausforderung, die der Benutzer-Computervorrichtung (104) zu präsentieren ist, basierend auf der Vertrauensbewertungsziffer, Auswählen, durch die eine oder die mehreren Computervorrichtungen (102), eines Herausforderungsformats basierend auf der Vertrauensbewertungsziffer umfasst.

8. Verfahren nach Anspruch 7, wobei das Herausforderungsformat eines einer Werbung oder einer Meinungsumfrage umfasst.

9. Verfahren nach Anspruch 1, wobei das Verfahren ferner umfasst, durch die eine oder die mehreren Computervorrichtungen (102) basierend auf der Vertrauensbewertungsziffer eine Rate zu bestimmen, bei der die Benutzer-Computervorrichtung (104) zusätzliche Herausforderungen empfangen kann.

10. Verfahren nach Anspruch 1, wobei das Verfahren ferner umfasst, durch die eine oder die mehreren Computervorrichtungen (102) dem Ressourcenbereitsteller eine Validierung des Verifizierungstokens bereitzustellen.

11. Computerisiertes System eines vollständig automatisierten öffentlichen Turing-Tests zum Auseinanderhalten von Computern und Menschen, CAPTCHA (102), konfiguriert zum Durchführen von Operationen, wobei die Operationen ein Verfahren umfassen, wie in einem der Ansprüche 1 bis 10 definiert.

12. Computerlesbares Medium (112), das Anweisungen (114) speichert, die, wenn sie durch eine oder mehrere Computervorrichtungen ausgeführt werden, bewirken, dass die eine oder die mehreren Computervorrichtungen Operationen durchführen, wobei die Operationen ein Verfahren umfassen, wie in einem der Ansprüche 1 bis 10 definiert.

## Revendications

1. Procédé mis en œuvre par un ordinateur pour vérifier qu'un utilisateur est un utilisateur humain, le procédé mis en œuvre par un ordinateur comprenant :
la réception (212, 402, 502), en provenance d'un dispositif informatique d'utilisateur (104) et au moyen d'un ou de plusieurs dispositifs informatiques (102) qui mettent en œuvre un système de test de Turing Public Complètement Automatique informatisé pour distinguer des Ordinateurs et des Êtres Humains, CAPTCHA, d'une unique requête pour engager un processus de vérification pour accéder, au moyen du dispositif informatique d'utilisateur (104), à un dispositif informatique de fournisseur de ressources (150) ;
la détermination, au moyen des un ou plusieurs dispositifs informatiques (102) et à partir de l'unique requête, d'un défi à proposer au dispositif informatique d'utilisateur (104), en réalisant:
l'obtention (214, 404, 504), au moyen des un ou plusieurs dispositifs informatiques (102), d'un signal ou de plusieurs signaux de réputation qui sont associés au dispositif informatique d'utilisateur (104), incluant l'accès, à partir d'une base de données (124), à un historique Web d'utilisateur qui est associé au dispositif informatique d'utilisateur (104) et le traitement de l'historique Web en tant que signal de réputation, la base de données (124) étant externe par rapport aux un ou plusieurs dispositifs informatiques ;
la détermination (214, 406, 506), au moyen des un ou plusieurs dispositifs informatiques (102), d'un score de confiance pour le dispositif informatique d'utilisateur sur la base des un ou plusieurs signaux de réputation ; et
la sélection (216, 408, 508), au moyen des un ou plusieurs dispositifs informatiques (102), et sur la base au moins en partie du score de confiance, du défi à proposer (410, 510) au dispositif informatique d'utilisateur ;
la réception (222, 412, 512), au moyen des un ou plusieurs dispositifs informatiques (102), d'une réponse au défi en provenance du dispositif informatique d'utilisateur ;
la mise à jour (514), au moyen des un ou plusieurs dispositifs informatiques (102), du score de confiance sur la base de la réponse au défi pour obtenir un score de confiance mis à jour ; et
la détermination (518), au moyen des un ou plusieurs dispositifs informatiques (102), de s'il convient de vérifier le dispositif informatique d'utilisateur (104) sur la base du score de confiance mis à jour ou non en fournissant, au moyen des un ou plusieurs dispositifs informatiques (102), un jeton de vérification au dispositif informatique d'utilisateur (104) lorsque le score de confiance mis à jour est supérieur à une valeur de seuil.

2. Procédé selon la revendication 1, dans lequel les un ou plusieurs signaux de réputation comprennent un identifiant de dispositif ou une adresse de Protocole Internet.

3. Procédé selon la revendication 1, dans lequel les un ou plusieurs signaux de réputation comprennent un compte d'utilisateur, l'historique Web d'utilisateur étant associé au compte d'utilisateur.

4. Procédé selon la revendication 1, dans lequel la détermination (406, 506), au moyen des un ou plusieurs dispositifs informatiques (102), du score de confiance pour le dispositif informatique d'utilisateur (104) sur la base des un ou plusieurs signaux de réputation comprend la sommation, au moyen des un ou plusieurs dispositifs informatiques (102), d'une ou de plusieurs valeurs de confiance qui sont associées aux un ou plusieurs signaux de réputation pour déterminer le score de confiance, dans lequel les une ou plusieurs valeurs de confiance sont prédéterminées et sont accédées à partir d'une mémoire inclue dans les un ou plusieurs dispositifs informatiques.

5. Procédé selon la revendication 1, dans lequel la détermination (406, 506), au moyen des un ou plusieurs dispositifs informatiques (102), du score de confiance pour le dispositif informatique d'utilisateur (104) sur la base des un ou plusieurs signaux de réputation comprend l'entrée, au moyen des un ou plusieurs dispositifs informatiques (102), des un ou plusieurs signaux de réputation à l'intérieur d'une formule de calcul de score pour déterminer le score de confiance.

6. Procédé selon la revendication 1, dans lequel la sélection (408, 508), au moyen des un ou plusieurs dispositifs informatiques (102), du défi à présenter au dispositif informatique d'utilisateur (104) sur la base du score de confiance comprend la sélection, au moyen des un ou plusieurs dispositifs informatiques (102), d'une difficulté de défi sur la base du score de confiance.

7. Procédé selon la revendication 1, dans lequel la sélection (408, 508), au moyen des un ou plusieurs dispositifs informatiques (102), du défi à présenter au dispositif informatique d'utilisateur (104) sur la base du score de confiance comprend la sélection, au moyen des un ou plusieurs dispositifs informatiques (102), d'un format de défi sur la base du score de confiance.

8. Procédé selon la revendication 7, dans lequel le format de défi comprend un parmi une annonce publicitaire ou un sondage d'opinion.

9. Procédé selon la revendication 1, dans lequel le procédé comprend en outre la détermination, au moyen des un ou plusieurs dispositifs informatiques (102) sur la base du score de confiance, d'un débit auquel le dispositif informatique d'utilisateur (104) peut recevoir des défis additionnels.

10. Procédé selon la revendication 1, dans lequel le procédé comprend en outre la fourniture, au moyen des un ou plusieurs dispositifs informatiques (102), d'une validation du jeton de vérification au fournisseur de ressources.

11. Système de test de Turing Public Complètement Automatique informatisé pour distinguer des Ordinateurs et des Êtres Humains, CAPTCHA, (102) configuré pour réaliser des opérations, les opérations comprenant un procédé tel que défini selon l'une quelconque des revendications 1 à 10.

12. Support pouvant être lu par un ordinateur (112) stockant des instructions (114) qui, lorsqu'elles sont exécutées par un ou plusieurs dispositifs informatiques, forcent les un ou plusieurs dispositifs informatiques à réaliser des opérations, les opérations comprenant un procédé tel que défini selon l'une quelconque des revendications 1 à 10.
